# EUROPÄISCHE PATENTANMELDUNG

(11) **EP 1 384 619 A1**
(43) Veröffentlichungstag der Anmeldung: **28.01.2004**
(21) Anmeldenummer: 03016490.9
(22) Anmeldetag: 22.07.2003
(51) Int. Cl.: B60P 1/64

(54) **Universal-Verriegelung für Container auf einem Auflieger**

(30) Priorität: 24.07.2002 DE 20211194 U
(71) Anmelder: Hamburger Patent Schmiede GmbH, 21079 Hamburg (DE)
(72) Erfinder: Metternich, Heinz-Rüdiger, 21079 Hamburg (DE)
(74) Vertreter: Glaeser, Joachim, Dipl.-Ing.

(57) **Zusammenfassung**

Die Erfindung bezieht sich auf eineVerriegelung für Container an einem Aufliegerfahrzeug, an dessen vorderer Traverse Befestigungsmittel, wie Hebdreh-Verriegelungen (Twist-locks) und/oder Befestigungszapfen, angeordnet sind. Die am Auflieger (10) angebrachten vorderen Hebdreh-Verriegelungen (Twist-locks 20, 200) sind jeweils um mindestens eine Achse (21, 23) aus der Eingriffslage (Figur 1) mit Standardcontainern in eine Nichtarbeitslage (Figuren 2 und 3) außerhalb des Transportbereichs von Gooseneck-Containern verschwenkbar.

## Beschreibung

Die Erfindung bezieht sich auf eine Verriegelung für Container an einem Auflieger, an dessen vorderer Traverse Befestigungsmittel wie Hebdreh-Verriegelungen (Twist-locks) und/oder Befestigungszapfen angeordnet sind.

Bislang gibt es grundsätzlich zwei Arten von Aufliegern. Die eine Art ist dafür geeignet, Standardcontainer aufzunehmen und zu diesem Zweck befinden sich Hebdreh-Verriegelungen (Twist-locks) an dem Auflieger.

Bei der zweiten Art von Aufliegern geht es um den Transport von solchen Containern, die am Boden der vorderen Stirnseite mit einer Aussparung für die Zentrierung auf einem sogenannten Gooseneck-Chassis oder Gooseneck-Aufliegerteil ausgestattet sind. Derartige Gooseneck-Container können auf den zuerst beschriebenen Aufliegern nicht transportiert werden, weil die dort zur Verfügung stehenden Hebdreh-Verriegelungen nicht an der zu den Beschlägen passenden Stelle am Gooseneck-Container angeordnet sind.

In der jüngsten Zeit ist eine Tendenz zu überlangen Containern feststellbar, also insbesondere 45' langen Containern. Diese sind, damit Vorschriften erfüllt werden, im Bereich der vorderen Eckpfosten abgerundet, also gerade in einem Bereich, wo sich die Beschläge befinden. Damit derartige überlange Container transportiert werden können, weisen sie nach innen versetzt Aufnahmeöffnungen auf, die mit horizontalen Zapfen am Auflieger zusammen arbeiten können. Dies bedingt, dass diese Zapfen, je nachdem ob es sich um einen 40'- oder 45'-Container handelt, unterschiedliche Abstände zueinander haben müssen.

Gemäß der Erfindung soll eine Aufliegerverriegelung geschaffen werden, die zum Transport für alle Arten von Containern, also insbesondere von General-Purpose-Containern oder Standard-Containern, Containern mit 20', 40' oder 45' Länge und Container mit oder ohne Gooseneck-Tunnel geeignet ist. Erreicht wird dies durch die in den Ansprüchen angegebenen Merkmale.

Die Erfindung wird nachstehend anhand der Zeichnungen beispielsweise erläutert.
- Figur 1: zeigt eine schaubildliche Ansicht der Aufliegerverriegelung gemäß der Erfindung für den Transport von Standard-Containern.
- Figur 2: zeigt eine entsprechende schaubildliche Ansicht für den Transport eines 40'-Gooseneck-Containers.
- Figur 3: zeigt eine entsprechende schaubildliche Ansicht für den Transport eines 45'-Gooseneck-Containers.

Die Blickrichtung der Figuren ist so gewählt worden, dass die Fahrzeuglängserstreckung bzw. die Fahrtrichtung des nicht gezeigten Fahrzeugs von rechts unten nach links oben ausgerichtet ist. Dies bedeutet, dass der Teil 10 eine Traverse des nicht gezeigten Aufliegers ist, die sich von der einen Seite des Aufliegers zur anderen erstreckt, d.h. also senkrecht zur Längserstreckung des Fahrzeugs ist.

Die Traverse 10 hat im Wesentlichen die Form eines Kasten- oder Hohlprofils und ist als solche über nicht gezeigte Mittel mit dem eigentlichen Auflieger verbunden.

Zu beiden Seiten ist der Auflieger 10 abgeschrägt, damit er in den Raum mit dem vorgeschriebenen Radius für derartige Fahrzeuge bei Kurvenfahrt passt. Laut geltender. Vorschrift beträgt dieser Radius 2.040 mm.

An den beiden Seiten ist die Traverse 10 mit Verriegelungsteilen 20 und 200 für die Verriegelung an den Eckbeschlägen eines nicht gezeigten Containers ausgerüstet. Es handelt sich hierbei um die üblichen Hebdreh-Verriegelungen (Twist-lock). Es sind also Teile vorhanden, die den eigentlichen Riegel nach oben hin anheben, ihn um 90° drehen und dann schließlich, wenn sich der pilzförmige obere Teil des Riegels im Inneren eines Beschlages eines Containers befindet, auch festlegen können. Eine weitergehende Beschreibung ist hier nicht erforderlich, wesentlich ist jedoch, dass die Außenerstreckungen der Verriegelungen 20 und 200 jeweils so verändert worden sind, dass sich beide Verriegelungen im Inneren des bereits erwähnten Raumes mit dem Radius von 2.040 mm befinden.

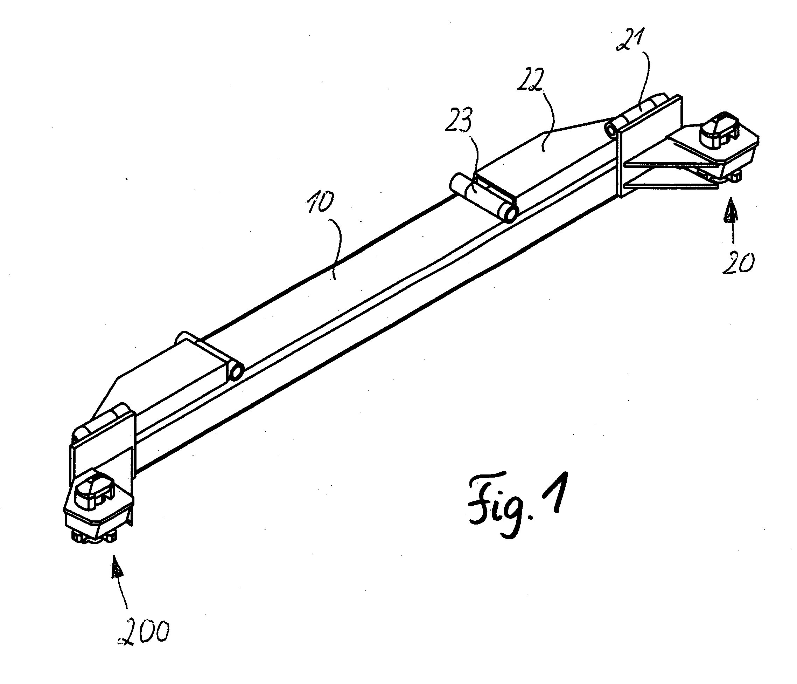

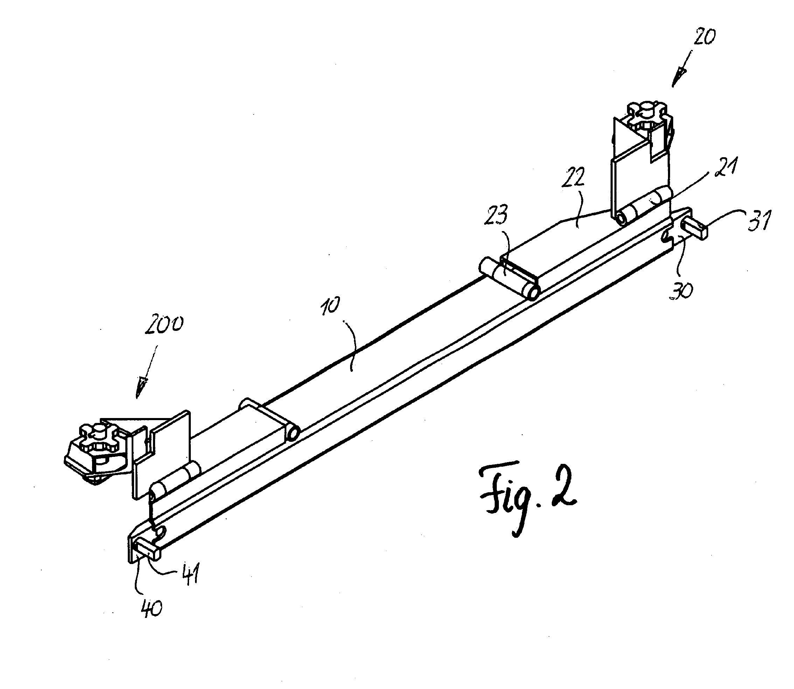

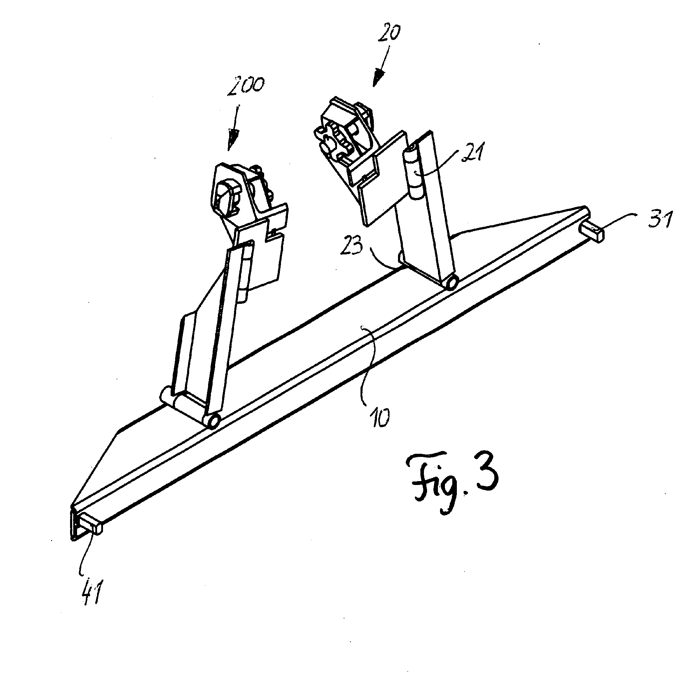

Gemäß der Erfindung sind nun die Verriegelungen über Schwenkachsen 21 und 23 an der Traverse 10 befestigt. Dies bedeutet, dass die Verriegelungseinheit 20 um eine sich horizontal quer zur Fahrzeugrichtung erstreckende Achse 21 um etwa 90° verschwenkt werden kann. Die Achse 21 ist an einem Bauteil oder Platte 22 befestigt. Der Teil 22 ist wiederum über eine weitere Schwenkachse 23 an der Traverse 10 befestigt, wobei die Schwenkachse 23 horizontal und in Längsrichtung des Fahrzeugs angeordnet ist. Auf diese Art und Weise kann der Verriegelungsteil 20 aus der in Figur 1 gezeigten Arbeitslage für die Aufnahme und Befestigung eines Standardcontainers in die in den Figuren 2 und 3 gezeigten Lagen verschwenkt werden.

In Figur 2 ist die Verriegelungseinheit 20 aus demjenigen Bereich heraus verschwenkt worden, den ein 40' Container mit Gooseneck einnehmen würde, wenn er auf dem Auflieger transportiert werden soll. Figur 3 zeigt die weiter verschwenkten Verriegelungen 20 und 200.

Die Figuren 2 und 3 lassen zwei Zapfen 31 und 41 erkennen, die an der Traverse 10 abstandsmäßig verstellbar befestigt sind.

Dies wird dadurch bewerkstelligt, dass der Zapfen 31 von einer Platte 30 und der Zapfen 41 von einer Platte 40 vorstehen. Die Platten 30 und 40 können an einer Seitenwand der Traverse 10 verschraubt werden. Die Art der Verschraubung ist hier nicht gezeigt, es kommen auch alle anderen lösbaren Befestigungsmöglichkeiten in Frage.

Wesentlich ist, dass die beiden einander gegenüber liegenden Zapfen 31 und 41 nach Figur 2 einen solchen Abstand haben, dass sie in die entsprechenden Öffnungen der Beschläge von 40'-Containern eingreifen können, wobei es sich um Container handelt, die mit einem Gooseneck am Boden ausgestattet sind, so dass eine Befestigung über die Verriegelungen 20, 200 ohnehin nicht in Frage kommt.

Gemäß Figur 3 ist der Abstand zwischen den Zapfen 31 und 41 gegenüber dem der Figur 2 verkürzt worden, und zwar auf einen Abstand von 2.090 mm, so dass überlange Container, insbesondere 45'-Container mit Gooseneck gehaltert werden können. Bei diesen überlangen Containern ist es erforderlich, um in dem vorgeschriebenen Raum mit dem Radius von 2.040 mm zu verbleiben, die Befestigungszapfen auf einen geringeren Abstand zu bringen, so wie dies in Figur 3 gezeigt ist.

Die Zapfen 31 und 41 können in der in Figur 1 gezeigten Lage der Verriegelung 20 und 200 in Bohrungen der Verriegelungen eingesteckt werden, um die Verriegelungen 20 und 200 in Arbeitslage zu haltern und zu sichern.

Bei einer bevorzugten Ausführungsform der Erfindung werden die beiden Verriegelungen nicht separat um zwei geometrischen Achsen verschwenkt. Statt dessen ist eine Achse so ausgerichtet worden, dass nur eine einzige Verschwenkungsbewegung nötig ist, dass die Verriegelungseinheit aus der Arbeitslage herausgebracht wird. Die Achse ist also nicht horizontal ausgerichtet, sondern in Fahrtrichtung ansteigend und steht zu dieser in einem Winkel im Bereich von 45°. Zweckmäßig ist, diese Schwenkbewegung dann durch eine Heb-Schwenkbewegung durchzuführen, und in diesem Fall ist eine Kugel-Pfannen-Verbindung ratsam.

## Patentansprüche

1. Verriegelung für Container an einem Aufliegerfahrzeug, an dessen vorderer Traverse Befestigungsmittel, wie Hebdreh-Verriegelungen (Twist-locks) und/oder Befestigungszapfen, angeordnet sind, **dadurch gekennzeichnet, dass** die am Auflieger (10) angebrachten vorderen Hebdreh-Verriegelungen (Twist-locks 20, 200) jeweils um mindestens eine Achse (21, 23) aus der Eingriffslage (Figur 1) mit Standardcontainern in eine Nichtarbeitslage (Figuren 2 und 3) außerhalb des Transportbereichs von Gooseneck-Containern verschwenkbar sind.

2. Verriegelung nach Anspruch 1, **dadurch gekennzeichnet, dass** die erste Achse (21) horizontal und senkrecht zur Längserstreckung des Fahrzeugs und die zweite Achse (23) horizontal in Längsrichtung des Fahrzeugs ausgerichtet sind.

3. Verriegelung nach Anspruch 1, **dadurch gekennzeichnet, dass** die Achse sowohl schräg zur Längs- als auch zur Quererstreckung des Fahrzeugs ausgerichtet ist.

4. Verriegelung nach Anspruch 3, **dadurch gekennzeichnet, dass** die Achse horizontal geneigt ist.

5. Verriegelung nach mindestens einem der Ansprüche 1 bis 4, **dadurch gekennzeichnet, dass** die Zapfen (31, 41) am Auflieger (10) mit unterschiedlichen Abständen zueinander verstellbar (2.090 bzw. 2.260 mm) und horizontal ausgerichtet sind und in Längsrichtung des Fahrzeugs angeordnet sind.

6. Verriegelung nach mindestens einem der Ansprüche 1 bis 5, **dadurch gekennzeichnet, dass** die Zapfen (31, 41) in Bohrungen einführbar sind, die am Gehäuse der Verriegelungen (20, 200) zwecks Festlegung während des Transports ausgebildet sind.
